# EUROPÄISCHE PATENTSCHRIFT

(11) **EP 1 104 650 B1**
(45) Veröffentlichungstag und Bekanntmachung des Hinweises auf die Patenterteilung: **20.08.2003**
(21) Anmeldenummer: 00125966.2
(22) Anmeldetag: 28.11.2000
(51) Int. Cl.: A21C 7/01

(54) **Langroller zum Langrollen von Teigstücken**
Stretching roller for stretch-rolling dough pieces
Dispositif de roulage pour l'étirage de morceaux de pâte

(30) Priorität: 03.12.1999 DE 19958417
(43) Veröffentlichungstag der Anmeldung: 06.06.2001
(73) Patentinhaber: Werner & Pfleiderer Lebensmitteltechnik GmbH, 91550 Dinkelsbühl (DE)
(72) Erfinder: Meier, Alexander, 91602 Dürrwangen (DE); Mülders, Herbert, 52222 Stolberg (DE)
(74) Vertreter: Rau, Manfred, Dr. Dipl.-Ing.

(56) Entgegenhaltungen:
- DE-C- 438 821
- DE-U- 29 921 323
- US-A- 2 725 019
- US-A- 2 746 401
- US-A- 2 925 053
- US-A- 5 110 610
- US-A- 5 277 569

## Beschreibung

Die Erfindung betrifft einen Langroller zum Langrollen von Teigstücken gemäss den Merkmalen des Oberbegriffs des Anspruchs 1 wie er aus der US-A-2725019 bekannt ist.

In derartigen Langrollern werden Teigstücke wie Fingerrolls, Minibaguettes, Schrippen, sowie Rundstücke, wie z.B. Krapfen, Berliner, Buns (Hamburger-Brötchen), Rosinenbrötchen etc. zylindrisch gerollt. Derartige Langroller weisen außer einem angetriebenen Unterband entweder ein ebenfalls angetriebenes Oberband oder ein Druckbrett auf. Oberband oder Druckbrett können in der Höhe eingestellt werden und nach oben weggefahren werden. Bei verschiedenen langgerollten Produkten ist es zweckmäßig, ein Oberband einzusetzen, während bei anderen es zweckmäßig ist, von oben ein Druckbrett einzusetzen. Der Umbau bekannter Vorrichtungen ist umständlich.

Der Erfindung liegt die Aufgabe zugrunde, einen Langroller zu schaffen, mittels dessen es möglich ist, sowohl mit einem Oberband als auch mit einem Druckbrett zu arbeiten.

Diese Aufgabe wird erfindungsgemäß durch die Merkmale des Anspruches 1 gelöst. Durch die erfindungsgemäßen Maßnahmen ist es in sehr einfacher Weise möglich, entweder ein Oberband in einer Arbeitsposition zum Langrollen zu schwenken oder alternativ hierzu ein Druckbrett, ohne daß der Gesamtbauaufwand, insbesondere die Baulänge nennenswert vergrößert wird.

Die Unteransprüche geben vorteilhafte Weiterbildungen und Ausgestaltungen wieder.

Weitere Vorteile und Einzelheiten der Erfindung ergeben sich aus der nachfolgenden Beschreibung anhand der Zeichnung. Es zeigt
- Fig. 1: eine Rollgebäckanlage mit einem Langroller in schematischer DarStellung und
- Fig. 2: eine Seitenansicht eines Langrollers gemäß der Erfindung.

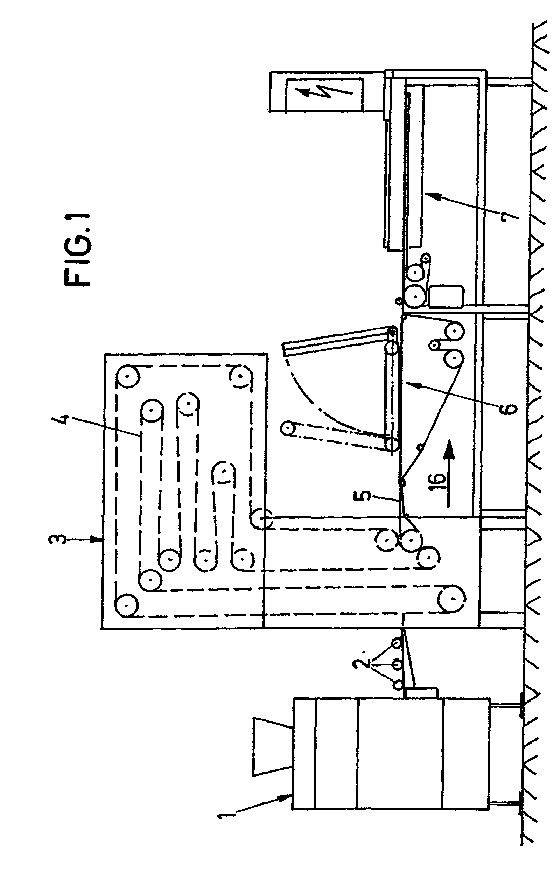

Die in Fig. 1 dargestellte Rollgebäck-Anlage weist eine Teigteil- und Rundwirk-Maschine 1 auf, in der in üblicher Weise Teigstücke 2 abgeteilt und in bekannter Weise rundgewirkt werden. Diese Teigstücke 2 werden einem Gärschrank 3 zugeführt, in dem sie in im einzelnen nicht dargestellten Gehängen an endlos umlaufenden Ketten 4 umlaufen und einem Gärprozeß unterworfen werden. Mittels eines Abtransportbandes 5 des Gärschrankes 3 werden die Teigstücke 2 einem Langroller 6 übergeben, von wo aus sie dann auf eine Ablege-Vorrichtung 7 gelangen. Dieser Grundaufbau einer Rollgebäck-Anlage ist üblich und bekannt, soweit es sich nicht um den Aufbau des Langrollers handelt.

Der Langroller 6 weist ein Grundgestell 8 auf, das an seiner Oberseite mit einer tischartigen, ebenen Platte versehen ist. Auf dieser Platte 9 ist ein endloses Unterband 10 abgestützt, das über im unteren Bereich des Grundgestells 8 gelagerte Antriebsrollen 11 geführt ist, die von einem Antriebsmotor 12 über einen Riementrieb angetrieben werden. Zwischen den Antriebsrollen 11 ist eine Band-Spanneinrichtung 14 vorgesehen. Der Antrieb des Unterbandes 10 erfolgt so, daß das auf der Platte 9 aufliegende Obertrum 15 in Transportrichtung 16 der Teigstücke 2 bewegt wird.

Oberhalb der Platte 9 ist ein rahmenartiges Traggestell 17 angeordnet, das über Höhen-Verstell-Vorrichtungen 18 in der Höhe relativ zur Platte 9 verstellbar ist. Diese Höhen-Verstell-Vorrichtungen 18 weisen je ein Handrad 19 mit einer Gewindespindel 20 auf, mittels derer der Abstand des Traggestells 17 von der Platte 9 bzw. dem Obertrum 15 des Unterbandes 10 stufenlos fein eingestellt werden kann. Mit den Gewinde-Spindeln 20 gekoppelt ist jeweils ein pneumatisch oder hydraulisch beaufschlagbarer Kolben-Zylinder-Antrieb 21 als Linearantrieb, mittels derer das Traggestell 17 aus einer unteren Arbeitsposition in eine obere Ruhe- bzw. Abhebe-Position verschoben werden kann. Alternativ kann auch ein elektrischer Antrieb vorgesehen sein.

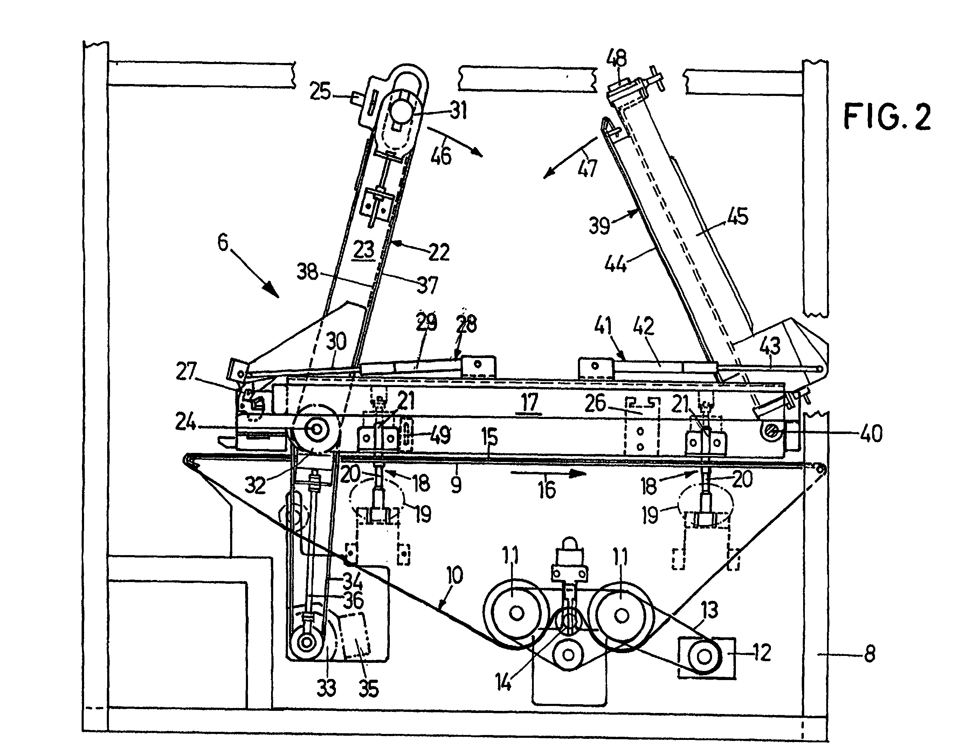

Am Traggestell 17 ist ein Oberband 22 angebracht, das in einem Schwenkrahmen 23 geführt und gelagert ist. Der Schwenkrahmen 23 ist um eine horizontale, quer zur Transportrichtung 16 verlaufende Schwenkachse 24 im Traggestell 17 schwenkbar gelagert und kann zwischen einer - in Fig. 2 dargestellten - hochgeschwenkten Ruhelage und einer horizontalen Arbeitsposition verschwenkt werden, in der der Schwenkrahmen 23 und damit auch das Oberband 22 relativ zum Traggestell 17 und damit auch relativ zum Obertrum 15 des Unterbandes 10 positioniert sind. In dieser Arbeitsposition wird das freie Ende des Schwenkrahmens 23 mittels eines Riegels 25 mit dem Traggestell 17 verriegelt, der in eine am Traggestell 17 angebrachte Riegelaufnahme eingreift. In der in Fig. 2 dargestellten hochgeschwenkten Stellung des Schwenkrahmens 23 mit Oberband 22 ist der Schwenkrahmen 23 mittels einer Klinken-Verriegelung 27 mit dem Traggestell 17 verriegelt, also gesichert. Das Hochschwenken des Schwenkrahmens 23 mit Oberband 22 wird mittels eines durch eine Gasfeder 28 gebildeten Kraftspeichers erleichtert, der die zu bewegenden Massen im wesentlichen kompensiert. Hierzu sind der Zylinder 29 der Gasfeder 28 am Traggestell 17 und Kolbenstange 30 der Gasfeder 28 am Schwenkrahmen 23 angelenkt.

Das Oberband 22 ist um eine am freien Ende des Schwenkrahmens 23 befindlichen Umlenkrolle 31 und eine konzentrisch zur Schwenkachse 24 angeordnete Antriebsrolle 32 geführt. Diese wiederum wird von einem im Grundgestell 8 angeordneten Antriebsmotor 33 über einen Riementrieb 34 angetrieben. Damit der Antriebsmotor 33 die bereits angesprochenen Höhenbewegungen des Schwenkrahmens 23 mit Oberband 22 mitmachen kann, ist er über eine Wippe 35 gelagert und über eine längeneinstellbare Zugstange 36 mit dem Traggestell 17 verbunden.

Das Untertrum 37 des Oberbandes 22 stützt sich gegen eine am Schwenkrahmen 23 angebrachte Druckplatte 38 ab, kann also von oben Druck auf die Teigstücke 2 ausüben; es wird daher in der Praxis auch als Druckband bezeichnet. Bei in die horizontale Arbeitsstellung geschwenktem Schwenkrahmen begrenzt das Obertrum 15 des Unterbandes 10 und das Untertrum 37 des Oberbandes 22 einen Kanal, in dem aufgrund von Relativgeschwindigkeiten von Unterband 10 und Oberband 22 gegeneinander die Teigstükke 2 langgerollt werden. Die Antriebsmotoren 12 und 33 sind drehzahlregelbar und drehrichtungsumkehrbar, so daß der Langroll-Prozeß genau gesteuert werden kann. Dieser Kanal kann in seiner Höhe durch die Handräder 19 mit Gewinde-Spindeln der Höhen-Verstell-Vorrichtungen 18 genau eingestellt werden. Wenn kein Langrollen erfolgen soll, wird das Traggestell 17 mittels der Antriebe 21 nach oben verfahren. Wie aus Fig. 2 ableitbar ist, erstreckt sich das Oberband 22 in der heruntergeschwenkten Arbeitsposition über mehr als Dreiviertel des Obertrums 15 des Unterbandes 10.

In Transportrichtung 16 unmittelbar hinter der Riegelaufnahme 26 ist eine Druckbrett-Einheit 39 um eine Schwenkachse 40 schwenkbar am Traggestell 17 angelenkt, wobei auch hier die Schwenkachse 40 horizontal und quer zur Transportrichtung 16 verläuft. Die Druckbrett-Einheit 39 ist - wie Fig. 2 entnehmbar ist - in den Bereich einschwenkbar, in den auch das Oberband 22 einschwenkbar ist. Das Oberband 22 und die Druckbrett-Einheit 39 haben also einen sich weitgehend überdeckenden Arbeitsbereich, können also selbstverständlich nur abwechselnd eingesetzt werden. Auch die Druckbrett-Einheit 39 ist mittels eines durch eine Gasfeder 41 gebildeten Kraftspeichers gegenüber dem Traggestell 17 in der Weise abgestützt, daß ihre Gewichtskraft im wesentlichen kompensiert wird. Hierzu ist auch der Zylinder 42 der Gasfeder 41 am Traggestell 17 angelenkt, während die Kolbenstange 43 mit einem mindestens ein Druckbrett 44 tragenden Schwenkrahmen 45 als Druckbrett-Einheit 39 gelenkig verbunden ist. Der Schwenkrahmen 45 ist um die Schwenkachse 40 verschwenkbar gelagert. Das Oberband 22 wird also entsprechend dem Schwenkrichtungspfeil 46 - im Uhrzeigersinn - in seine horizontale Arbeitsstellung verschwenkt, während die Druckbrett-Einheit 39 entsprechend dem Schwenkrichtungspfeil 47 in entgegengesetzter Richtung in ihre Arbeitsposition verschwenkt wird. In seiner horizontalen Arbeitsstellung ist der Abstand des Druckbrettes 44 vom Obertrum 15 des Unterbandes 10 in gleicher Weise einstellbar wie der des Oberbandes 22. In der Arbeitsposition wird die Druckbrett-Einheit 39 mit dem Traggestell 17 verriegelt. Hierzu sind am Schwenkrahmen 44 Riegel 48 angebracht, die in am Traggestell 17 ausgebildete Riegelaufnahmen 49 lösbar eingreifen können.

Hierzu werden zwischen einander benachbarten Druckbrettern 44 und zwischen den jeweils außen liegenden Druckbrettern 44 und den benachbarten Längs-Holmen 68 des Schwenkrahmens 45 Seiten-Führungsleisten 69 eingesetzt, die auf dem Unterband 10 aufliegen und in ihrer Position durch die Schwerkraft gehalten werden. Durch den seitlichen Abstand zweier benachbarter Seiten-Führungsleisten 69 wird die Länge des unter dem jeweiligen Druckbrett 44 langgerollten Teigstückes 2 festgelegt.

Die einzelnen Druckbretter 44 können unterschiedliche Breite aufweisen. Entsprechend weisen dann die Seiten-Führungsleisten 69 unterschiedliche Breite auf, so daß nicht nur durch einen einfachen Umbau eine Umstellung auf unterschiedliche Teigstücke möglich ist Es können auch gleichzeitig nebeneinander unterschiedliche Teigstücke, insbesondere unterschiedlich lange Teigstücke, langgerollt werden.

## Patentansprüche

1. Langroller zum Langrollen von Teigstücken (2),
mit einem Grundgestell (8),
mit einer Abstützung (Platte 9),
mit einem im Grundgestell (8) gelagerten, mit einem Obertrum (15) über die Abstützung (Platte 9) geführten, endlosen Unterband (10),
mit einem Schwenkrahmen mit einer Druckbrett-Einheit (39), der um eine Schwenkachse (40) verschwenkbar ist und einem endlosen Oberband (22) **dadurch gekennzeichnet, dass**
das Oberband (22) in einem Schwenkrahmen (23) gelagert ist und in einer ersten Schwenkrichtung (46) um eine Schwenkachse (24) aus einer hochgeschwenkten Ruheposition in eine dem Obertrum (15) benachbarte Arbeitsposition verschwenkbar ist und mit einem Untertrum (37) in der Arbeitsposition etwa parallel zum Obertrum (15) des Unterbandes (10) verläuft, dass die Druckbretteinheit (39) um die Schwenkachse (40) in einer der ersten Schwenkrichtung (46) entgegengesetzten zweiten Schwenkrichtung (47) aus einer hochgeschwenkten Ruheposition in eine dem Obertrum (15) des Unterbandes (10) benachbarte, im wesentlichen parallele
Arbeitsposition verschwenkbar ist und wobei die Arbeitsposition der Druckbrett-Einheit (39) und die Arbeitsposition des Oberbandes (22) einander zumindest teilweise überlappen.

2. Langroller nach Anspruch 1, **dadurch gekennzeichnet, daß** der Schwenkrahmen (23) mit Oberband (22) und die Druckbrett-Einheit (39) an einem gemeinsamen, oberhalb des Grundgestells (8) angeordneten Traggestell (17) um ihre Schwenkachsen (24, 40) schwenkbar gelagert sind.

3. Langroller nach Anspruch 2, **dadurch gekennzeichnet, daß** das Traggestell (17) mittels Abhebeantrieben ( 21) vom Grundgestell (8) abhebbar ausgebildet ist.

4. Langroller nach Anspruch 2, **dadurch gekennzeichnet, daß** das Traggestell (17) gegenüber dem Grundgestell (8) höheneinstellbar ist.

5. Langroller nach einem der Ansprüche 1 bis 4, **dadurch gekennzeichnet, daß** der Schwenkrahmen (23) mit Oberband (22) mittels eines Kraftspeichers (28) gewichtskompensiert ist.

6. Langroller nach einem der Ansprüche 1 bis 5, **dadurch gekennzeichnet, daß** die Druckbrett-Einheit (39) mittels eines Kraftspeichers (41) gewichtskompensiert ist.

7. Langroller nach Anspruch 5 oder 6, **dadurch gekennzeichnet, daß** die Kraftspeicher durch Gasfedern (28, 41) gebildet sind.

8. Langroller nach Anspruch 2 und einem der Ansprüche 5 bis 7, **dadurch gekennzeichnet,**
**daß** die Kraftspeicher (28, 41) am Traggestell (17) angelenkt sind.

9. Langroller nach einem der Ansprüche 1 bis 8, **dadurch gekennzeichnet, daß** der Schwenkrahmen (23) mit Oberband (22) in der Arbeitsposition verriegelbar ist.

10. Langroller nach einem der Ansprüche 1 bis 9, **dadurch gekennzeichnet,**
**daß** die Druckbrett-Einheit (39) in ihrer Arbeitsposition verriegelbar ist.

11. Langroller nach Anspruch 3, **dadurch gekennzeichnet, daß** die Abhebeantriebe pneumatisch, hydraulisch oder elektrisch betätigbar sind.

## Claims

1. Stretching molder for stretch molding dough pieces (2), comprising
a base frame (8);
a support (plate 9);
a continuous bottom belt (10) which is mounted on the base frame (8) and an upper strand (15) of which is led over the support (plate 9);
a pivoting frame which comprises a pressure board unit (39) and which is pivotable about a pivot (40); and a continuous top belt (22);
**characterized**
**in that** the top belt (22) is mounted in a pivoting frame (23) and is pivotable about a pivot (24) in a first pivoting direction (46), from an upwards pivoted position of rest into a working position in vicinity to the upper strand (15), and, by a lower strand (37), extends approximately in parallel to the upper strand (15) of the bottom belt (10) in the working position; in that the pressure board unit (39) is pivotable about the pivot (40) in a second pivoting direction (47) counter to the first pivoting direction (46), from an upwards pivoted position of rest into a position of working substantially parallel to, and in vicinity to, the upper strand (15) of the bottom belt (10), with the working position of the pressure board unit (39) and the working position of the top belt (22) overlapping each other at least partially.

2. Stretching molder according to claim 1, **characterized in that** the pivoting frame (23), together with the top belt (22), and the pressure board unit (39) are mounted on a joint support frame (17) pivotably about the pivots (24, 40), the support frame (17) being arranged above the base frame (8).

3. Stretching molder according to claim 2, **characterized in that** the support frame (17) is formed for being lifted off the base frame (8) by means of elevating drives (21).

4. Stretching molder according to claim 2, **characterized in that** the support frame (17) is adjustable in height relative to the base frame (8).

5. Stretching molder according to one of claims 1 to 4, **characterized in that** the pivoting frame (23), together with the top belt (22), is counterbalanced in weight by means of an energy storing device (28).

6. Stretching molder according to one of claims 1 to 5, **characterized in that** the pressure board unit (39) is counterbalanced in weight by means of an energy storing device (41).

7. Stretching molder according to claim 5 or 6, **characterized in that** the energy storing devices are gas springs (28, 41).

8. Stretching molder according to claim 2 and one of claims 5 to 7, **characterized in that** the energy storing devices (28, 41) are articulated to the support frame (17).

9. Stretching molder according to one of claims 1 to 8, **characterized in that** the pivoting frame (23), together with the top belt (22), is lockable in the working position.

10. Stretching molder according to one of claims 1 to 9, **characterized in that** the pressure board unit (39) is lockable in the working position.

11. Stretching molder according to claim 3, **characterized in that** the elevating drives are pneumatically, hydraulically or electrically actuated.

## Revendications

1. Dispositif de roulage longitudinal destiné à l'étirage longitudinal de morceaux de pâte (2), comportant
un châssis de base (8),
un support (plaque 9),
une bande inférieure (10) sans fin avec un brin supérieur (15) montée dans le châssis de base (8), guidée au-dessus du support (plaque 9),
un cadre pivotant avec une unité (39) à planches de pression, lequel peut pivoter autour d'un axe de pivotement (40), et une bande supérieure (22) sans fin,
**caractérisé en ce que**
la bande supérieure (22) est montée dans un cadre pivotant (23), et peut être pivotée dans un premier sens de pivotement (46) autour d'un axe de pivotement (24) d'une position de repos pivotée vers le haut dans une position de travail adjacente au brin supérieur (15), et s'étend dans la position de travail avec un brin inférieur (37) sensiblement parallèlement au brin supérieur (15) de la bande inférieure (10), **en ce que**, l'unité (39) à planches de pression peut être pivotée autour de l'axe de pivotement (40) dans un deuxième sens de pivotement (47) opposé au premier sens de pivotement (46), d'une position de repos pivotée vers le haut dans une position de travail sensiblement parallèle adjacente au brin supérieur (15) de la bande inférieure (10), et la position de travail de l'unité (39) à planches de pression et la position de travail de la bande supérieure (22) se chevauchant mutuellement, au moins partiellement.

2. Dispositif de roulage longitudinal selon la revendication 1, **caractérisé en ce que** le cadre pivotant (23) avec la bande supérieure (22) et l'unité (39) à planches de pression sont montés sur un châssis de support (17) commun, disposé au-dessus du châssis de base (8), de façon à pouvoir pivoter autour de leurs axes de pivotement (24, 40).

3. Dispositif de roulage longitudinal selon la revendication 2, **caractérisé en ce que** le châssis de support (17) est agencé de façon à pouvoir être soulevé du châssis de base (8) au moyen d'entraînements de relèvement (21).

4. Dispositif de roulage longitudinal selon la revendication 2, **caractérisé en ce que** le châssis de support (17) est réglable en hauteur par rapport au châssis de base (8).

5. Dispositif de roulage longitudinal selon l'une quelconque des revendications 1 à 4, **caractérisé en ce que** le cadre pivotant (23) avec la bande supérieure (22) est compensé en poids au moyen d'un accumulateur de force (28).

6. Dispositif de roulage longitudinal selon l'une quelconque des revendications 1 à 5, **caractérisé en ce que** l'unité (39) à planches de pression est compensée en poids au moyen d'un accumulateur de force (41).

7. Dispositif de roulage longitudinal selon la revendication 5 ou 6, **caractérisé en ce que** les accumulateurs de force sont constitués d'amortisseurs pneumatiques (28, 41).

8. Dispositif de roulage longitudinal selon la revendication 2 et l'une quelconque des revendications 5 à 7, **caractérisé en ce que** les accumulateurs de force (28, 41) sont articulés sur le châssis de support (17).

9. Dispositif de roulage longitudinal selon l'une quelconque des revendications 1 à 8, **caractérisé en ce que** le cadre pivotant (23) avec la bande supérieure (22) peut être verrouillé dans la position de travail.

10. Dispositif de roulage longitudinal selon l'une quelconque des revendications 1 à 9, **caractérisé en ce que** l'unité (39) à planches de pression peut être verrouillée dans sa position de travail.

11. Dispositif de roulage longitudinal selon la revendication 3, **caractérisé en ce que** les entraînements de relèvement peuvent être actionnés par voie pneumatique, hydraulique ou électrique.
